# FASCICULE DE BREVET EUROPEEN

(11) **EP 3 341 993 B1**
(45) Date de publication et mention de la délivrance du brevet: **09.10.2024**
(21) Numéro de dépôt: 16760768.8
(22) Date de dépôt: 09.08.2016
(51) Int. Cl.: H01M 8/10, H01M 8/023, H01M 8/0258, H01M 8/04119, H01M 8/1007

(54) **PILE A COMBUSTIBLE POUR OPTIMISER L'HUMIDIFICATION DE L'AIR**
BRENNSTOFFZELLE ZUR OPTIMIERUNG DER LUFTBEFEUCHTUNG
FUEL CELL FOR OPTIMISING AIR HUMIDIFICATION

(30) Priorité: 24.08.2015 FR 1557888
(43) Date de publication de la demande: 04.07.2018
(73) Titulaire: Commissariat à l'Energie Atomique et aux Energies Alternatives, 75015 Paris (FR)
(72) Inventeur: VINCENT, Rémi, 38000 Grenoble (FR); HLADYS, Bertrand, 73100 Aix-les-Bains (FR); TREMBLAY, Denis, 38340 Pommiers-la-Placette (FR)
(74) Mandataire: INNOV-GROUP
(86) Numéro de dépôt international: PCT/FR2016/052054
(87) Numéro de publication internationale: WO 2017/032939

(56) Documents cités:
- EP-A1- 1 030 396
- EP-A1- 1 036 422
- FR-A1- 2 398 392
- JP-A- 2008 186 696
- US-A1- 2011 305 960
- US-A1- 2012 052 207
- MICHAEL WILLIAMS ET AL: "Robotic Arm for Automated Assembly of Proton Exchange Membrane Fuel Cell Stacks", JOURNAL OF FUEL CELL SCIENCE AND TECHNOLOGY, vol. 11, no. 5, 2 May 2014 (2014-05-02), US, pages 054501, XP055321507, ISSN: 1550-624X, DOI: 10.1115/1.4027392
- WATANABE M ET AL: "POLYMER ELECTROLYTE MEMBRANES INCORPORATED WITH NANOMETER-SIZE PARTICLES OF PT AND/OR METAL-OXIDES: EXPERIMENTAL ANALYSIS OF THE SELF-HUMIDIFICATION AND SUPPRESSION OF GAS-CROSSOVER IN FUEL CELLS", JOURNAL OF PHYSICAL CHEMISTRY. B, MATERIALS, SURFACES, INTERFACES AND BIOPHYSICAL, WASHINGTON, DC, US, vol. 102, no. 17, 23 April 1998 (1998-04-23), pages 3129 - 3137, XP001023544, ISSN: 1089-5647, DOI: 10.1021/JP973477E

## Description

L'invention concerne les piles à combustible, et plus particulièrement les piles à combustibles incluant des plaques bipolaires entre lesquelles est disposé un assemblage membrane/électrodes à membrane échangeuse de protons.

Les piles à combustible sont notamment envisagées comme source d'énergie pour des véhicules automobiles produits à grande échelle dans le futur ou comme sources d'énergie auxiliaire dans l'aéronautique. Une pile à combustible est un dispositif électrochimique qui convertit de l'énergie chimique directement en énergie électrique. Une pile à combustible comprend un empilement en série de plusieurs cellules. Chaque cellule génère typiquement une tension de l'ordre de 1 Volt, et leur empilement permet de générer une tension d'alimentation d'un niveau plus élevé, par exemple de l'ordre d'une centaine de volts.

Parmi les types de piles à combustible connus, on peut notamment citer la pile à combustible à membrane d'échange de protons, dite PEM, fonctionnant à basse température. De telles piles à combustible présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face pour former un assemblage membrane/électrodes dit AME. La membrane comporte généralement à sa périphérie deux renforts fixés sur des faces respectives de cette membrane.

Au niveau de l'anode, du dihydrogène utilisé comme carburant est ionisé pour produire des protons traversant la membrane. La membrane forme ainsi un conducteur ionique. Les électrons produits par cette réaction migrent vers une plaque d'écoulement, puis traversent un circuit électrique externe à la cellule pour former un courant électrique. Au niveau de la cathode, de l'oxygène est réduit et réagit avec les protons pour former de l'eau.

La pile à combustible peut comprendre plusieurs plaques dites bipolaires, par exemple en métal, empilées les unes sur les autres. La membrane est disposée entre deux plaques bipolaires. Les plaques bipolaires peuvent comprendre des canaux et orifices d'écoulement pour guider en continu les réactifs et les produits vers/depuis la membrane. Les plaques bipolaires comprennent aussi des canaux d'écoulement pour guider du liquide de refroidissement évacuant la chaleur produite. Les produits de réaction et les espèces non réactives sont évacués par entraînement par l'écoulement jusqu'à la sortie des réseaux de canaux d'écoulement. Les canaux d'écoulement des différents écoulements sont séparés par l'intermédiaire des plaques bipolaires notamment.

Les plaques bipolaires sont également électriquement conductrices pour collecter des électrons générés au niveau de l'anode. Les plaques bipolaires ont également une fonction mécanique de transmission des efforts de serrage de l'empilement, nécessaire à la qualité du contact électrique. Des couches de diffusion gazeuse sont interposées entre les électrodes et les plaques bipolaires et sont en contact avec les plaques bipolaires.

Une conduction électronique est réalisée à travers les plaques bipolaires, une conduction ionique étant obtenue à travers la membrane.

Le document US2011/0305960 décrit une pile à combustible, comprenant :
- un assemblage membrane/électrodes incluant une membrane échangeuse de protons, et une cathode en contact avec une première face de la membrane ;
- deux plaques bipolaires entre lesquelles l'assemblage membrane/électrodes est disposé, lesdites plaques bipolaires étant traversées par au moins un premier collecteur d'écoulement en communication avec ladite cathode;
- l'assemblage membrane/électrodes comporte une première zone active recouverte par ladite cathode.

Un composant hydrophile est disposé dans un collecteur d'écoulement.

Le document EP1036422 décrit un empilement de pile à combustible associé à un dispositif d'humidification avec inversion du flux d'écoulement au niveau de la cathode. Le document décrit l'inversion du flux d'écoulement et l'intégration d'un dispositif de retenue d'eau hors de l'empilement, pour stocker de l'eau à relâcher lors de l'inversion.

Le document FR2398392 décrit un matériau hydrophile disposé sur la surface de plaques bipolaires.

Le document US2012/052207 décrit des plaques bipolaires revêtues d'un matériau hydrophile.

Certaines conceptions de plaques bipolaires utilisent des zones d'homogénéisation pour raccorder des collecteurs d'entrée et de sortie aux différents canaux d'écoulement des plaques bipolaires. Les réactifs sont amenés au contact des électrodes à partir de collecteurs d'entrée et les produits sont évacués à partir de collecteurs de sortie connectés aux différents canaux d'écoulement. Les collecteurs d'entrée et les collecteurs de sortie traversent généralement l'épaisseur de l'empilement de part en part. Les collecteurs d'entrée et de sortie sont usuellement obtenus par :
- des orifices respectifs traversant chaque plaque bipolaire à sa périphérie ;
- des orifices respectifs traversant chaque membrane et ses renforts à sa périphérie ;
- par des joints, chacun interposé entre une plaque bipolaire et un renfort.

Différentes solutions techniques sont connues pour mettre en communication les collecteurs d'entrée et de sortie avec les différents canaux d'écoulement. Il est notamment connu de réaliser des passages entre deux tôles métalliques d'une plaque bipolaire. Ces passages débouchent d'une part dans des orifices de collecteurs respectifs, et d'autre part dans des orifices d'injection. Une zone d'homogénéisation comprend des canaux qui mettent en communication des orifices d'injection avec des canaux d'écoulement.

La zone d'homogénéisation comprend en général : une zone de transfert de fluide de refroidissement, une zone d'homogénéisation de circuit de comburant et une zone d'homogénéisation de circuit de carburant superposées et débouchant respectivement vers un collecteur de liquide de refroidissement, un collecteur de circuit de comburant et un collecteur de circuit de carburant. L'inconvénient des zones d'homogénéisation est la surface qu'elles occupent sans participer aux réactions électrochimiques, les zones d'homogénéisation couvrent typiquement entre 5 et 10% de la surface de la zone active incluant les canaux d'écoulement des réactifs.

Par ailleurs, un niveau d'humidité suffisant à l'entrée d'air est souhaitable pour optimiser le fonctionnement et la durée de vie de la pile à combustible. Une humidité suffisante est notamment souhaitable pour réduire les contraintes hydriques sur la membrane échangeuse de protons, à l'origine de ruptures de membranes. Pour obtenir l'humidification de l'air, il est connu d'adjoindre un humidificateur d'air à la pile à combustible. Un tel humidificateur d'air suppose un système de pompage coûteux et énergivore.

L'invention vise à résoudre un ou plusieurs de ces inconvénients. L'invention porte ainsi sur une pile à combustible telle que définie dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective éclatée d'un exemple d'empilement d'assemblages membrane/électrodes et de plaques bipolaires pour une pile à combustible;
- la figure 2 est une vue en perspective éclatée de plaques bipolaires et d'un assemblage membrane/électrodes destinés à être empilés pour former des collecteurs d'écoulement à travers l'empilement ;
- la figure 3 est une vue en coupe longitudinale schématique de l'assemblage membrane/électrodes d'un exemple de mise en oeuvre d'un premier mode de réalisation d'une pile à combustible selon l'invention ;
- la figure 4 est une vue de dessus d'un renfort de l'assemblage membrane/électrodes de la figure 3 ;
- la figure 5 est une vue de dessus schématique du renfort de la figure 4 associé à une membrane, des électrodes et des éléments hydrophiles ;
- la figure 6 est une vue de dessus de l'ensemble de la figure 5, associé à des couches de diffusion gazeuse ;
- la figure 7 est une vue en coupe longitudinale schématique de l'assemblage membrane/électrodes d'un exemple de mise en oeuvre d'un deuxième mode de réalisation d'une pile à combustible selon l'invention ;
- la figure 8 est une vue de dessus schématique d'un renfort associé à une membrane, des électrodes et des éléments hydrophiles pour l'assemblage membrane/électrodes de la figure 7.

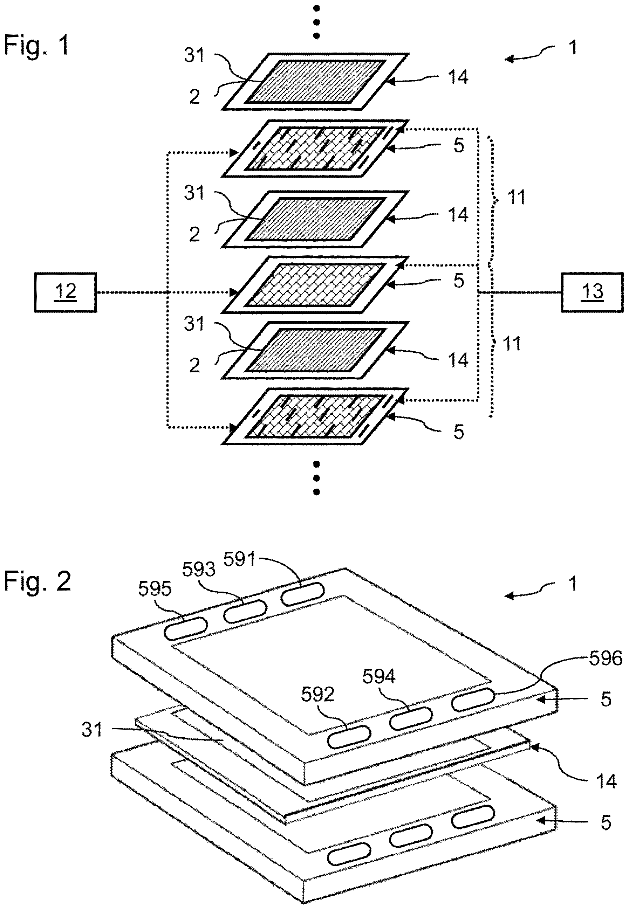

La figure 1 est une vue en perspective éclatée schématique d'un empilement de cellules 11 d'une pile à combustible 1. La pile à combustible 1 comprend plusieurs cellules 11 superposées. Les cellules 11 sont du type à membrane échangeuse de protons ou membrane à électrolyte polymère.

La pile à combustible 1 comprend une source de carburant 12. La source de carburant 12 alimente ici en dihydrogène une entrée de chaque cellule 11. La pile à combustible 1 comprend également une source de comburant 13. La source de comburant 13 alimente ici en air une entrée de chaque cellule 11, l'oxygène de l'air étant utilisé comme oxydant. Chaque cellule 11 comprend également des canaux d'échappement. Une ou plusieurs cellules 11 présentent également un circuit de refroidissement.

Chaque cellule 11 comprend un assemblage membrane/électrodes 14 ou AME 14. Un assemblage membrane/électrodes 14 comprend un électrolyte 2, une cathode 31 et une anode (non illustrée) placées de part et d'autre de l'électrolyte et fixées sur cet électrolyte 2. La couche d'électrolyte 2 forme une membrane semi-perméable permettant une conduction protonique tout en étant imperméable aux gaz présents dans la cellule. La couche d'électrolyte empêche également un passage des électrons entre l'anode et la cathode 31.

Entre chaque couple d'AME adjacents, une plaque bipolaire 5 est disposée. Chaque plaque bipolaire 5 définit des canaux d'écoulement anodiques et des canaux d'écoulement cathodiques. Des plaques bipolaires 5 définissent également des canaux d'écoulement de liquide de refroidissement entre deux assemblages membrane/électrodes successifs.

De façon connue en soi, durant le fonctionnement de la pile à combustible 1, de l'air s'écoule entre une AME et une plaque bipolaire 5, et du dihydrogène s'écoule entre cette AME et une autre plaque bipolaire 5. Au niveau de l'anode, le dihydrogène est ionisé pour produire des protons qui traversent l'AME. Les électrons produits par cette réaction sont collectés par une plaque bipolaire 5. Les électrons produits sont ensuite appliqués sur une charge électrique connectée à la pile à combustible 1 pour former un courant électrique. Au niveau de la cathode, de l'oxygène est réduit et réagit avec les protons pour former de l'eau. Les réactions au niveau de l'anode et de la cathode sont régies comme suit :

H₂ → 2H⁺ + 2e⁻

au niveau de l'anode ;

4H⁺ + 4e⁻ + O₂ → 2H₂O

au niveau de la cathode.

Durant son fonctionnement, une cellule de la pile à combustible génère usuellement une tension continue entre l'anode et la cathode de l'ordre de 1V.

La figure 2 est une vue en perspective éclatée schématique de deux plaques bipolaires 5 et d'un assemblage membrane/électrodes destinés à être inclus dans l'empilement de la pile à combustible 1. L'empilement des plaques bipolaires 5 et des assemblages membrane/électrodes 14 est destiné à former une pluralité de collecteurs d'écoulement, dont la disposition est illustrée ici uniquement de manière schématique. À cet effet, des orifices respectifs sont ménagés à travers les plaques bipolaires 5 et à travers les assemblages membrane/électrodes 14. Les AME 14 comportent des renforts (non illustrés) à leur périphérie.

Les plaques bipolaires 5 comportent ainsi des orifices 591, 593 et 595 au niveau d'une première extrémité, et des orifices 592, 594 et 596 au niveau d'une deuxième extrémité opposée à la première. L'orifice 591 sert par exemple pour former un collecteur d'alimentation en carburant, l'orifice 592 sert par exemple pour former un collecteur d'évacuation de résidus de combustion, l'orifice 594 sert par exemple pour former un collecteur d'alimentation en liquide de refroidissement, l'orifice 593 sert par exemple pour former un collecteur d'évacuation de liquide de refroidissement, l'orifice 596 sert par exemple pour former un collecteur d'alimentation en comburant, et l'orifice 595 sert par exemple pour former un collecteur d'évacuation d'eau de réaction.

Les orifices des plaques bipolaires 5 et des assemblages membrane/électrodes 14 (soit les orifices ménagés dans les renforts non illustrés) sont disposés en vis-à-vis afin de former les différents collecteurs d'écoulement.

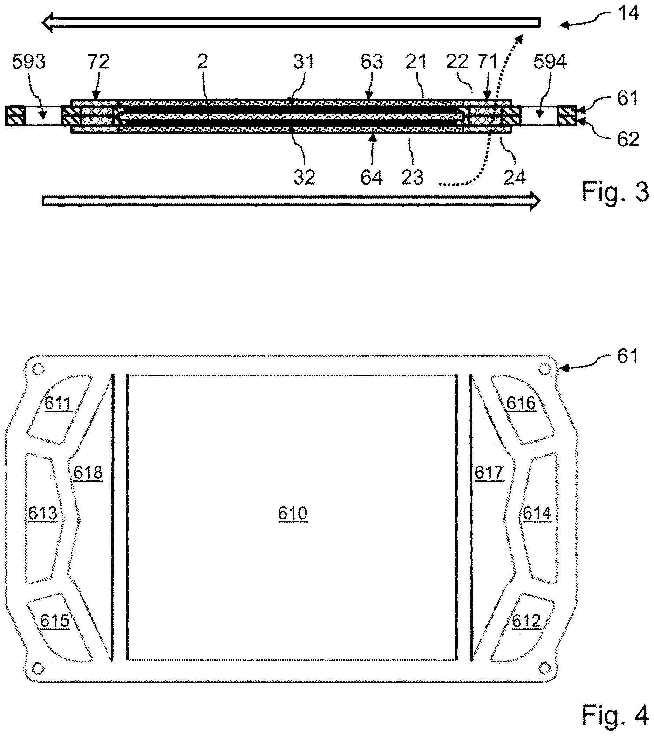

La figure 3 est une vue en coupe de côté d'un assemblage membrane/électrodes pour une pile à combustible selon un exemple de mode de réalisation de l'invention. L'assemblage membrane/électrodes 14 inclut la membrane 2, une cathode 31 et une anode 32 solidarisées de part et d'autre de la membrane 2. La composition et la structure de la cathode 31 ou de l'anode 32 sont connues en soi de l'homme du métier et ne seront pas davantage détaillées. L'assemblage membrane/électrodes 14 inclut en outre des renforts 61 et 62. Les renforts 61 et 62 sont fixés à la périphérie de faces respectives de la membrane 2. Une couche de diffusion gazeuse 63 est en contact avec la cathode 31 à travers un orifice médian ménagé à travers le renfort 61. Une couche de diffusion gazeuse 64 est en contact avec l'anode 32 à travers un orifice médian ménagé à travers le renfort 62.

Une plaque bipolaire fait face à la couche de diffusion gazeuse 63 et comporte des canaux d'écoulement pour guider un comburant tel que de l'air selon la direction illustrée par la flèche supérieure. La cathode 31 définit une zone active 21 dans laquelle intervient la réaction électrochimique cathodique. Une zone de liaison ou zone d'homogénéisation 22 est ménagée entre la zone active 21 et les collecteurs d'écoulement 592, 594 et 596. La zone de liaison 22 est destinée de façon connue en soi à homogénéiser l'écoulement de comburant entre le collecteur 596 et les canaux d'écoulement cathodiques.

Une autre plaque bipolaire fait face à la couche de diffusion gazeuse 64 et comporte des canaux d'écoulement pour guider un carburant tel que du dihydrogène selon la direction illustrée par la flèche inférieure. L'anode 32 définit une zone active 23 dans laquelle intervient la réaction électrochimique anodique. Une zone de liaison ou zone d'homogénéisation 24 est ménagée entre la zone active 23 et les collecteurs d'écoulement 592,594 et 596. La zone de liaison 24 est destinée de façon connue en soi à homogénéiser l'écoulement de carburant entre les canaux d'écoulement anodiques et le collecteur 592.

Bien que non illustrés, des joints isolent les canaux d'écoulement anodiques et cathodiques par rapport à l'écoulement dans les collecteurs d'écoulement 593 et 594.

En suivant les canaux d'écoulement cathodiques, la réaction chimique produit de l'eau qui accroît l'humidité dans l'écoulement. Cependant, l'air présent à l'entrée de la cathode 31 présente potentiellement un niveau d'humidité très réduit.

Selon ce mode de réalisation, un composant hydrophile 71 est ménagé pour former une jonction hydrique entre la zone de liaison 24 et la zone de liaison 22. Une telle liaison hydrique permet de laisser traverser de l'humidité présente en sortie d'écoulement anodique vers l'entrée de l'écoulement cathodique, comme illustré par la flèche en traits discontinus. L'humidité ainsi récupérée en entrée de l'écoulement cathodique permet d'humidifier la membrane 2 et de réduire les contraintes sur celle-ci, même en l'absence de circuit externe d'humidification de l'écoulement de comburant. Cette humidification de l'écoulement cathodique est en outre réalisée dans une zone non active pour la réaction électrochimique, ce qui permet de bénéficier d'une fonction supplémentaire dans cette zone. Pour optimiser l'utilisation d'une zone de liaison 22, le composant hydrophile 71 occupe avantageusement au moins la moitié de la surface de celle-ci.

Afin d'éviter une réaction électrochimique au niveau du composant hydrophile 71 qui risquerait de faire disparaître l'eau et d'assécher l'écoulement cathodique, la cathode 31 ne recouvre pas la zone de liaison 22. De même, l'anode 31 ne recouvre pas la zone de liaison 24. Afin d'éviter ou de limiter toute réaction électrochimique dans les zones de liaison 22 et 24, le composant hydrophile 71 est soit dénué de matériau catalyseur, soit présente au plus une quantité de catalyseur égal à 1 µg/cm².

Dans l'exemple illustré, une zone de liaison ou d'homogénéisation est avantageusement ménagée entre la zone active 21 et les collecteurs d'écoulement 591, 593 et 595, et une autre zone de liaison ou d'homogénéisation est avantageusement ménagée entre la zone active 23 et des collecteurs d'écoulement 591, 593 et 595. Un composant hydrophile 72 est avantageusement aménagé pour former une jonction hydrique entre ces dernières zones de liaison. Une telle liaison hydrique permet de laisser traverser de l'humidité présente en sortie d'écoulement cathodique vers l'entrée de l'écoulement anodique, humidité qui peut à nouveau traverser le composant hydrophile 71 pour atteindre l'entrée de l'écoulement cathodique.

Pour éviter un écoulement parasite de dihydrogène ou de dioxygène à travers les composants hydrophiles 71 et 72 ménagés entre les zones de liaison, ces composants hydrophiles 71 et 72 sont imperméables aux gaz.

Le composant hydrophile 71 et/ou le composant hydrophile 72 peuvent inclure (typiquement plus de 50 % en poids) ou être constitués d'un des matériaux suivants : la silice colloïdale, la bentonite, un polymère de type acide perfluorosulfonique. Le composant hydrophile 71 et/ou le composant hydrophile 72 peuvent avantageusement être réalisés dans le même matériau que la membrane 2. Le composant hydrophile 71 et/ou le composant hydrophile 72 peuvent avantageusement être réalisés avec un liant tel que le Carboxyméthylcellulose ou un alcool polyvinylique.

Le composant hydrophile 71 et/ou le composant hydrophile 72 peuvent être réalisés dans un matériau présentant une diffusion de l'eau d'au moins 0,1 mg/s.cm², et au maximum de 0,5 mg/s.cm².

Les composants hydrophiles 71 et 72 présentent avantageusement une épaisseur supérieure à celle de la membrane 2.

Avantageusement, afin de favoriser le passage de l'humidité à travers les composants 71 ou 72, le composant 71 et/ou le composant 72 ne sont pas recouverts par les couches de diffusion gazeuse 63 et 64.

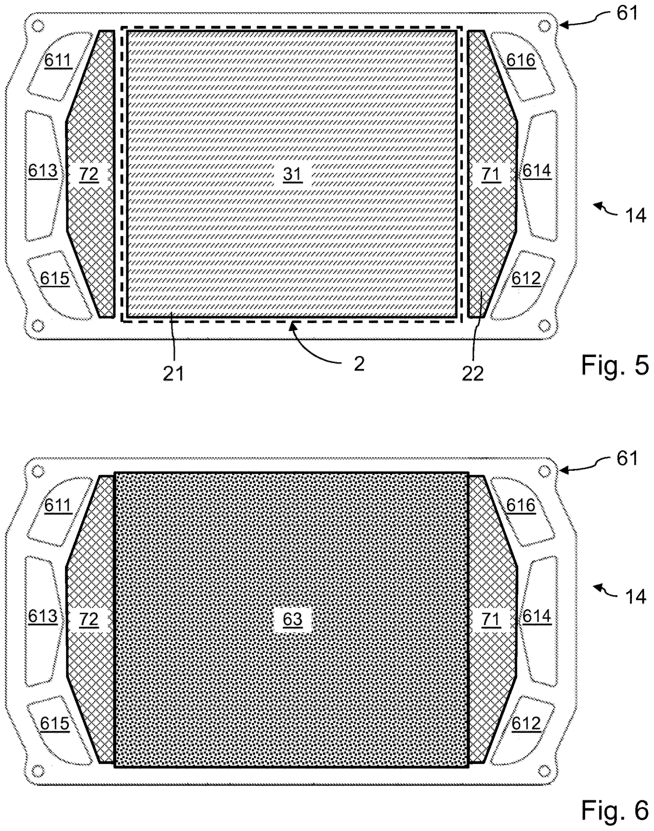

La figure 4 est une vue de dessus d'un exemple de renfort 61 pouvant être mis en oeuvre dans l'assemblage membrane/électrodes de la figure 3. La figure 5 est une vue de dessus de l'assemblage membrane/électrodes 14 dépourvu de couche de diffusion gazeuse. La figure 6 est une vue de dessus de l'assemblage membrane/électrodes 14 muni de la couche de diffusion gazeuse 63. Le renfort 62 peut présenter une structure identique à celle du renfort 61. Le renfort 61 se présente ici sous la forme d'une couche ajourée. Le renfort 61 est par exemple réalisé en matériau polymère connu en soi. Le renfort 61 comporte de façon connue en soi une ouverture médiane 610 destinée à découvrir la majeure partie de la cathode 31. Le renfort 61 entoure par ailleurs cette cathode 31.

Le renfort 61 comporte par ailleurs des orifices 611, 613 et 615 ménagés de côté par rapport à l'ouverture médiane 610. Les orifices 611, 613 et 615 sont destinés à être positionnés en regard des orifices 591, 593 et 595 des plaques bipolaires 5. Un orifice 618 est ménagé entre les orifices 611, 613, 615 et l'orifice médian 610. L'orifice 618 est destiné à être traversé par le composant hydrophile 72. Le renfort 61 comporte des orifices 612, 614 et 616 ménagés à l'opposée des orifices 611, 613 et 615, par rapport à l'ouverture médiane 610. Les orifices 612, 614 et 616 sont destinés à être positionnés en regard des orifices 592, 594 et 596 des plaques bipolaires 5. Un orifice 617 est ménagé entre les orifices 612, 614, 616 et l'orifice médian 610. L'orifice 617 est destiné à être traversé par le composant hydrophile 71.

Comme illustré ici, le composant hydrophile 71 recouvre avantageusement la bordure du renfort 61 délimitant l'orifice 617.

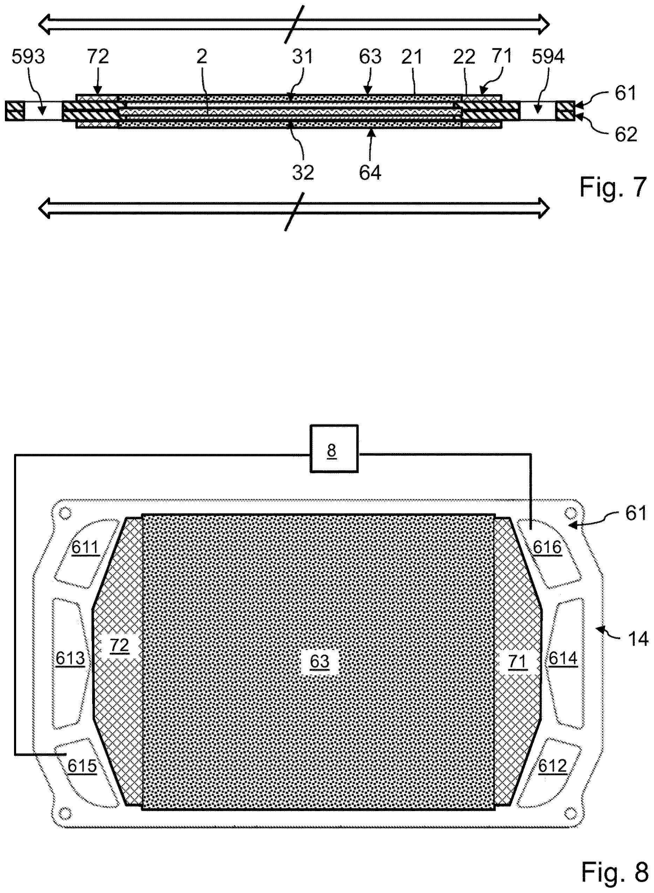

La figure 7 est une vue en coupe de côté d'un assemblage membrane/électrodes pour une pile à combustible selon un exemple d'un autre mode de réalisation de l'invention. La figure 8 est une vue de dessus schématique de l'assemblage membrane/électrodes 14 associé à un dispositif 8 détaillé par la suite.

L'assemblage membrane/électrodes 14 inclut la membrane 2, une cathode 31 et une anode 32 qui peuvent être identiques à celles du mode de réalisation précédent. L'assemblage membrane/électrodes 14 inclut également des renforts 61 et 62 fixés à la périphérie de faces respectives de la membrane 2. L'assemblage membrane/électrodes 14 comportent en outre des couches de diffusion gazeuse 63 et 64 qui peuvent être identiques à celles du mode de réalisation précédent.

Une plaque bipolaire fait face à la couche de diffusion gazeuse 63 et comporte des canaux d'écoulement pour guider un comburant tel que de l'air. La cathode 31 définit une zone active 21 dans laquelle intervient la réaction électrochimique cathodique. Une zone de liaison ou zone d'homogénéisation 22 est ménagée entre la zone active 21 et les collecteurs d'écoulement 592, 594 et 596.

Une autre plaque bipolaire fait face à la couche de diffusion gazeuse 64 et comporte des canaux d'écoulement pour guider un carburant tel que du dihydrogène. L'anode 32 définit une zone active 23 dans laquelle intervient la réaction électrochimique anodique. Une zone de liaison ou zone d'homogénéisation 24 est ménagée entre la zone active 23 et les collecteurs d'écoulement 592,594 et 596.

Bien que non illustrés, des joints isolent les canaux d'écoulement anodiques et cathodiques par rapport à l'écoulement dans les collecteurs d'écoulement 593 et 594.

Des composants hydrophiles 71 et 72 sont disposés dans les zones de jonction cathodiques de part et d'autre de la zone active 21. Dans ce mode de réalisation, les composants hydrophiles 71 et 72 ne traversent pas les renforts 61 et 62. Les renforts 61 et 62 sont ainsi hermétiques au niveau des composants hydrophiles 71 et 72. Les composants hydrophiles 71 et 72 sont ici destinés à stocker de l'humidité pour un sens d'écoulement respectif, puis destiné à restituer cette humidité pour un sens écoulement respectif inversé.

À cet effet, un dispositif 8 est configuré pour générer alternativement un écoulement de comburant du collecteur d'écoulement 591 vers le collecteur d'écoulement 596, et un écoulement de comburant du collecteur d'écoulement 596 vers le collecteur d'écoulement 591. Lorsque le comburant s'écoule du collecteur d'écoulement 591 vers le collecteur d'écoulement 596 : le composant hydrophile 71 absorbe de l'humidité en sortie d'écoulement, alors que le composant hydrophile 72 en restitue en entrée. Lorsque le concurrent s'écoule du collecteur d'écoulement 596 vers le collecteur d'écoulement 591 : le composant hydrophile 72 absorbe de l'humidité en sortie d'écoulement, alors que le composant hydrophile 71 en restitue en entrée.

Avantageusement, le dispositif 8 est configuré pour inverser le sens d'écoulement entre les collecteurs d'écoulement 591 et 596 avec une période comprise entre 10 et 30 secondes. Une telle période peut s'avérer suffisante pour absorber l'humidité en sortie d'écoulement de comburant.

## Revendications

1. Pile à combustible (1), comprenant :
- un assemblage membrane/électrodes (14) incluant une membrane échangeuse de protons (2), et une cathode (31) en contact avec une première face de la membrane, et une anode (32) en contact avec une deuxième face de la membrane (2) ;
- deux plaques bipolaires (5) entre lesquelles l'assemblage membrane/électrodes (14) est disposé, lesdites plaques bipolaires étant traversées par au moins un premier collecteur d'écoulement (596) en communication avec ladite cathode et par un deuxième collecteur d'écoulement (596);
**Caractérisée en ce que** :
- l'assemblage membrane/électrodes (14) comporte une première zone active (21) recouverte par ladite cathode (31), une deuxième zone active recouverte par ladite anode (32), une première zone de liaison (22) non recouverte par ladite cathode (31) et disposée entre ledit premier collecteur d'écoulement (596) et la première zone active, et une deuxième zone de liaison non recouverte par ladite anode et disposée entre ledit deuxième collecteur d'écoulement (592) et la deuxième zone active ;
- l'assemblage membrane/électrodes (14) comporte en outre un premier composant hydrophile (71) disposé dans ladite première zone de liaison (22), le premier composant hydrophile (71) imperméable aux gaz étant ménagé pour former une jonction hydrique entre lesdites première et deuxième zones de liaison ;
- la pile à combustible comprend un renfort (61) fixé à la membrane (2) et au premier composant hydrophile (71), ledit renfort comprenant un premier orifice (617) à travers lequel ledit premier composant hydrophile (617) est accessible et comprenant un deuxième orifice (610) à travers lequel ladite cathode (31) est accessible, le renfort étant fixé à la périphérie de la membrane et séparant la membrane échangeuse de protons du premier composant hydrophile (71), le renfort (61), la membrane (2) et le premier composant hydrophile (71) étant des éléments distincts.

2. Pile à combustible (1) selon la revendication 1, dans laquelle :
- lesdites plaques bipolaires (5) sont traversées par un troisième collecteur d'écoulement (591) en communication avec ladite cathode ;
- l'assemblage membrane/électrodes (14) comporte une troisième zone de liaison non recouverte par ladite cathode (31) et disposée entre ledit troisième collecteur d'écoulement (591) et ladite première zone active (21) ;
- l'assemblage membrane/électrodes (14) comporte en outre un deuxième composant hydrophile (72) disposé dans ladite troisième zone de liaison ;
- la pile à combustible comporte un dispositif (8) configuré pour générer successivement un écoulement de comburant du premier collecteur (596) d'écoulement vers le troisième collecteur d'écoulement (591), puis du troisième collecteur d'écoulement vers le premier collecteur d'écoulement.

3. Pile à combustible (1) selon la revendication 2, dans lequel ledit dispositif est configuré pour inverser le sens d'écoulement entre les premier et troisième collecteurs d'écoulement avec une période comprise entre 10 et 30 secondes.

4. Pile à combustible (1) selon l'une quelconque des revendications précédentes, dans lequel ledit premier composant hydrophile (71) recouvre la bordure dudit renfort (61) délimitant ledit premier orifice (617).

5. Pile à combustible (1) selon l'une quelconque des revendications précédentes, dans lequel ledit premier composant hydrophile (71) inclut un matériau choisi dans le groupe incluant la silice colloïdale, la bentonite, un polymère de type acide perfluorosulfonique.

6. Pile à combustible (1) selon l'une quelconque des revendications précédentes, dans lequel ledit premier composant hydrophile (71) présente une diffusion de l'eau d'au moins 0,1 mg/s.cm², et au maximum de 0,5 mg/s.cm².

7. Pile à combustible (1) selon l'une quelconque des revendications précédentes, comportant une couche de diffusion gazeuse (63) en contact avec la cathode (31), ladite couche de diffusion gazeuse (63) ne s'étendant pas jusqu'à l'aplomb dudit premier composant hydrophile (71).

8. Pile à combustible (1) selon l'une quelconque des revendications précédentes, dans lequel ledit premier composant hydrophile (71) inclut une quantité de matériau catalyseur au plus égale à 1 µg/cm².

9. Pile à combustible (1) selon l'une quelconque des revendications précédentes, dans lequel ledit premier composant hydrophile (71) occupe au moins la moitié de la surface de la première zone de liaison (22).

## Patentansprüche

1. Brennstoffzelle (1), umfassend:
- eine Membran/Elektroden-Baugruppe (14), die eine Protonenaustauschmembran (2) und eine Kathode (31), welche mit einer ersten Seite der Membran in Kontakt ist, und eine Anode (32) umfasst, welche mit einer zweiten Seite der Membran (2) in Kontakt ist;
- zwei bipolare Platten (5), zwischen denen die Membran/Elektroden-Baugruppe (14) angeordnet ist, wobei sich mindestens ein erster Flüssigkeitssammler (596), welcher mit der Kathode in Kontakt ist, sowie ein zweiter Flüssigkeitssammler (596) durch die bipolaren Platten erstrecken;
**dadurch gekennzeichnet, dass**:
- die Membran/Elektroden-Baugruppe (14) einen ersten aktiven Bereich (21), welcher von der Kathode (31) bedeckt ist, einen zweiten aktiven Bereich, welcher von der Anode (32) bedeckt ist, einen ersten Verbindungsbereich (22), welcher nicht von der Kathode (31) bedeckt und zwischen dem ersten Flüssigkeitssammler (596) und dem ersten aktiven Bereich angeordnet ist, und einen zweiten Verbindungsbereich aufweist, welcher nicht von der Anode bedeckt ist und zwischen dem zweiten Flüssigkeitssammler (592) und dem zweiten aktiven Bereich angeordnet ist;
- die Membran/Elektroden-Baugruppe (14) darüber hinaus einen ersten hydrophilen Bestandteil (71) aufweist, der im ersten Verbindungsbereich (22) angeordnet ist, wobei der gasundurchlässige erste hydrophile Bestandteil (71) derart ausgestaltet ist, dass er eine wasserführende Verbindung zwischen dem ersten und dem zweiten Verbindungsbereich bildet;
- die Brennstoffzelle eine Verstärkung (61) umfasst, welche an der Membran (2) und an dem ersten hydrophilen Bestandteil (71) befestigt ist, wobei die Verstärkung eine erste Öffnung (617) umfasst, durch welche der erste hydrophile Bestandteil (617) zugänglich ist, und eine zweite Öffnung (610) umfasst, durch welche die Kathode (31) zugänglich ist, wobei die Verstärkung am Randbereich der Membran befestigt ist und die Protonenaustauschmembran vom ersten hydrophilen Bestandteil (71) trennt, wobei es sich bei der Verstärkung (61), der Membran (2) und dem ersten hydrophilen Bestandteil (71) jeweils um gesonderte Elemente handelt.

2. Brennstoffzelle (1) nach Anspruch 1, wobei:
ein dritter Flüssigkeitssammler (591), welcher mit der Kathode in Verbindung steht, sich durch die bipolaren Platten (5) erstreckt;
- die Membran/Elektroden-Baugruppe (14) einen dritten Verbindungsbereich aufweist, der nicht von der Kathode (31) bedeckt ist und zwischen dem dritten Flüssigkeitssammler (591) und dem ersten aktiven Bereich (21) angeordnet ist;
- die Membran/Elektroden-Baugruppe (14) darüber hinaus einen zweiten hydrophilen Bestandteil (72) aufweist, welcher in dem dritten Verbindungsbereich angeordnet ist;
- die Brennstoffzelle eine Vorrichtung (8) aufweist, die dafür ausgelegt ist, nacheinander einen Oxidationsmittelstrom vom ersten Flüssigkeitssammler (596) zum dritten Flüssigkeitssammler (591) und dann vom dritten Flüssigkeitssammler zum ersten Flüssigkeitssammler zu erzeugen.

3. Brennstoffzelle (1) nach Anspruch 2, wobei die Vorrichtung dafür ausgelegt ist, die Strömungsrichtung zwischen dem ersten und dem dritten Flüssigkeitssammler mit einer Periodendauer im Bereich von 10 bis 30 Sekunden umzukehren.

4. Brennstoffzelle (1) nach einem beliebigen der vorhergehenden Ansprüche, wobei der erste hydrophile Bestandteil (71) den Rand der Verstärkung (61) bedeckt, welcher die erste Öffnung (617) begrenzt.

5. Brennstoffzelle (1) nach einem beliebigen der vorhergehenden Ansprüche, wobei der erste hydrophile Bestandteil (71) ein Material beinhaltet, das aus der Gruppe ausgewählt ist, welche kolloidales Siliciumdioxid, Bentonit, ein Polymer des Typs Perfluorsulfonsäure umfasst.

6. Brennstoffzelle (1) nach einem beliebigen der vorhergehenden Ansprüche, wobei der erste hydrophile Bestandteil (71) eine Wasserdiffusionsrate von mindestens 0,1 mg/s.cm² und von höchstens 0,5 mg/s.cm² aufweist.

7. Brennstoffzelle (1) nach einem beliebigen der vorhergehenden Ansprüche, wobei sie eine Gasdiffusionsschicht (63) aufweist, die mit der Kathode (31) in Kontakt ist, wobei die Gasdiffusionsschicht (63) sich nicht bis unter den ersten hydrophilen Bestandteil (71) erstreckt.

8. Brennstoffzelle (1) nach einem beliebigen der vorhergehenden Ansprüche, wobei der erste hydrophile Bestandteil (71) eine Menge an Katalysatormaterial von höchstens 1 µg/cm² beinhaltet.

9. Brennstoffzelle (1) nach einem beliebigen der vorhergehenden Ansprüche, wobei der erste hydrophile Bestandteil (71) mindestens die Hälfte der Fläche des ersten Verbindungsbereichs (22) einnimmt.

## Claims

1. Fuel cell (1), comprising:
- a membrane/electrode assembly (14) including a proton exchange membrane (2), and a cathode (31) in contact with a first face of the membrane, and an anode (32) in contact with a second face of the membrane (2);
- two bipolar plates (5) between which is positioned the membrane/electrode assembly (14), said bipolar plates being traversed by at least one first flow collector (596) in communication with said cathode and by a second flow collector (596);
**characterized in that**:
- the membrane/electrode assembly (14) comprises a first active region (21) covered by said cathode (31), a second active region covered by said anode (32), a first connecting region (22) not covered by said cathode (31) and positioned between said first flow collector (596) and the first active region, and a second connecting region not covered by said anode and positioned between said second flow collector (592) and the second active region;
- the membrane/electrode assembly (14) additionally comprises a first hydrophilic component (71) positioned in said first connecting region (22), the first hydrophilic component (71), which is impermeable to gases, being inserted to form a hydric junction between said first and second connecting regions;
- the fuel cell comprises a reinforcement (61) attached to the membrane (2) and to the first hydrophilic component (71), said reinforcement comprising a first orifice (617) through which said first hydrophilic component (617) is accessible and comprising a second orifice (610) through which said cathode (31) is accessible, the reinforcement being attached to the periphery of the membrane and separating the proton exchange membrane from the first hydrophilic component (71), the reinforcement (61), the membrane (2) and the first hydrophilic component (71) being separate elements.

2. Fuel cell (1) according to Claim 1, in which:
- said bipolar plates (5) are traversed by a third flow collector (591) in communication with said cathode;
- the membrane/electrode assembly (14) comprises a third connecting region not covered by said cathode (31) and positioned between said third flow collector (591) and said first active region (21);
- the membrane/electrode assembly (14) additionally comprises a second hydrophilic component (72) positioned in said third connecting region;
- the fuel cell comprises a device (8) configured in order to successively generate a flow of oxidant from the first flow collector (596) towards the third flow collector (591) and then from the third flow collector towards the first flow collector.

3. Fuel cell (1) according to Claim 2, in which said device is configured in order to reverse the direction of flow between the first and third flow collectors with a period of between 10 and 30 seconds.

4. Fuel cell (1) according to any one of the preceding claims, in which said first hydrophilic component (71) covers the edge of said reinforcement (61) delimiting said first orifice (617).

5. Fuel cell (1) according to any one of the preceding claims, in which said first hydrophilic component (71) includes a material chosen from the group including colloidal silica, bentonite and a polymer of perfluorosulfonic acid type.

6. Fuel cell (1) according to any one of the preceding claims, in which said first hydrophilic component (71) exhibits a diffusion of the water of at least 0.1 mg/s.cm², and at most of 0.5 mg/s.cm².

7. Fuel cell (1) according to any one of the preceding claims, comprising a gas diffusion layer (63) in contact with the cathode (31), said gas diffusion layer (63) not extending as far as vertical with said first hydrophilic component (71).

8. Fuel cell (1) according to any one of the preceding claims, in which said first hydrophilic component (71) includes an amount of catalyst material at most equal to 1 µg/cm².

9. Fuel cell (1) according to any one of the preceding claims, in which said first hydrophilic component (71) occupies at least half of the surface area of the first connecting region (22).
